# EUROPEAN PATENT APPLICATION

(11) **EP 1 795 654 A2**
(43) Date of publication of application: **13.06.2007**
(21) Application number: 06024064.5
(22) Date of filing: 26.04.2001
(51) Int. Cl.: E02B 3/12, E02D 19/18

(54) **A method of retaining soil or confining water flows with an environmental membrane**

(30) Priority: 26.04.2000 US 199776 P; 28.03.2001 US 279498 P
(62) Divisional of application: 01930901.2
(71) Applicant: Velcro Industries B.V. (NL), Curacao (AN)
(72) Inventor: Tachauer, Ernesto S., Bedford, NH 03110 (US); Provencher, Ronald, Manchester, NH 03103 (US); Banker, Shawn, C., Lee, NH 03824-6416 (US); Provost, George, A., Litchfield, NH 03052 (US)
(74) Representative: Müller-Boré & Partner Patentanwälte

(57) **Abstract**

A method of retaining soil or confining water flows, the method providing an environmental membrane comprised of a base layer of thermoplastic resin and, over at least one broad surface of the membrane, a dispersion of fastener elements, such as hook and loop fastener elements, that are available for engagement with complementary material for securing to the membrane; and covering soil with the provided membrane to retain soil against erosion or to confine water flows.

## Description

### Background of the Invention

As is known, membranes and other sheet and board materials are incorporated in many different physical arrangements to protect against a wide range of environmental conditions. Examples include geotextiles to protect against water penetration or erosion, roof membranes and building wrap materials to protect against rain and wind, and membranes as well as sheet, batt and board materials that serve as vapor barriers and sound barriers. Other environmental products include thermal insulation for buildings and materials used for outdoor shelters, tarpaulins, pallet wrap and packaging materials, boat and machinery covers, plant covers and other covers for agricultural use, and temporary covers over garbage dumps. Generally, such products are cost-sensitive regarding manufacture and the labor required to apply or secure them in place.

Previous work in the area of wide fasteners include US Patent No. 6,035,498, and U.S. Patent No. 5,945,131, the entire contents of each of which are incorporated herein by reference as if entirely set forth.

### Summary of the Invention

The invention features an environmental membrane which may advantageously be of substantial dimensions in both length and width, comprised of a base layer of thermoplastic resin and, over at least one broad surface of the membrane, a dispersion of fastener elements, e.g., hook and loop fastener elements, that are available for engagement with complementary material for securing to the membrane.

An important preferred feature of many aspects of the invention is that the base layer of the membrane is in a permanently width-wise stretched condition relative to its machine direction (the machine direction being the direction of its continuous production), in some cases the base layer being in a stretched condition in both width-wise and length-wise directions, and in some cases important cases being biaxially-oriented. Preferred techniques for forming and stretching such base layer are described in U.S. patent applications USSN 08/789,637, filed January 27, 1997, now abandoned in favor of USSN 09/070,865, filed April 30, 1998, now U.S. Patent 6,035,498 and USSN 09/518,853, filed March 3, 2000, all herein incorporated by reference in their entirety. In most cases the base layer has a thickness between about .001 inch and .015 inch, preferably less than about .008 inch, while in some important instances the thickness is less than .005 inch, in certain cases even less than .003 inch.

Depending upon the particular type of membrane and fastening needs, the fastener elements are typically present at density of between about 50 to 2000 fastener elements per square inch, the fastener elements being distributed generally over the entire broad fastening surface of the membrane, or over a margin or other region at which attachment is desired. In important cases, the density of the fastener elements is at least 300 fastener elements per square inch.

In certain broad aspects of the invention the fastener elements may be of any form provided in any manner, including post-forming or post-molding after fabrication of the base sheet, but in preferred cases the fastener elements are constructed for hook and loop fastening, and are formed integrally with the base sheet prior to stretching the base sheet.

In certain preferred embodiments the fastener elements are of hook form, while in other cases the fasteners are of loop form, or are secured fibers that function as loops.

Broadly, loop-engageable hook elements may be of mushroom, palm tree or single or multi-directioned hook form, and may be formed integrally with the sheet, or may be partially or fully post-formed after the base sheet is fabricated. In certain preferred embodiments the hooks are discretely molded elements, formed simultaneously with the base sheet. In particularly preferred embodiments of this aspect of the invention, hooks are of tapered profile, rising from a wide base at the base sheet to a relatively narrow loop-engageable crook

Important embodiments of the above aspects of the invention include one or more of the following features. The fastener or hook elements are discretely molded elements, each preferably having a profile, in the direction of primary loading or in certain cases, in the machine direction, that is like the base of a pyramid (pyramidal), rising by taper from a relatively wide profile base that is integral with the common base layer of the membrane to a narrower portion formed into a crook. The membrane has dimensions of at least two feet in both length and width and in important instances, dimensions of at least three feet or five feet or more in length, width or both. The thermoplastic resin of which the membrane and fastener elements is formed is selected from the group consisting of polypropylene, polyethylene terephthalate, polyethylene and nylon, copolymers thereof, compatible mixtures thereof and compatible mixtures with other compatible materials such as selected rubber and rubber-like materials. In important instances the plastic resin includes a biocide or fungicide capable of preventing growth of biological material such as mold or fungus, or includes a U.V. absorber or other additive to protect the membrane from deterioration or includes an insect or vermin repellant. Also, in important instances the formed membrane is in a post-treated condition, for instance, after forming, being rendered permeable or semi-permeable to air or moisture vapor in the case of building wrap or agricultural cover, or to water seepage, in the case of geotextiles of the type constructed for soil retention while capable of passing water.

In other products, according to the invention, the base layer of the membrane is water impermeable, or impermeable to air, or retentive of solids, or impenetrable or repellant to vermin or so called "vector", referring e.g. to rodents, birds and insects that may disturb the object being protected.

In cases where the fasteners are defined by loop material, it is preferable that it comprise a needled and stretched non-woven material formed, e.g., by the techniques described in U.S. patent application USSN 08/922,292, filed September 3, 1997 or 09/262,159, filed September 3, 1999 or 09/322,663, filed May 28, 1999, each of which is incorporated by reference. In some cases the non-woven material is pre-stretched and laminated to a pre-stretched plastic base layer; in other cases the materials are laminated prior to final stretching, the stretching of the base plastic layer serving to help form hook-engageable formations in the fibers of the non-woven material.

According to one broad aspect of the invention, in a method of releasably fastening objects together including (a) providing a first object with a continuous hook fastener membrane having a base of thermoplastic resin and an array of hook fastener elements formed contiguously with resin of one side of the base; and (b) releasably engaging complementary loop fastener elements of a second object to the fastener elements of the first object; there is an improvement (c) in which the base of the fastener membrane is a permanently stretched sheet of resin having a width of at least 61 cm (2 feet), a length greater than its width and a thickness of less than about 0.38 mm (0.015 inch).

Variations of this aspect of the invention can include one or more of the following features. The first object is a wall of a building, the second object is a wall covering, the method including securing the hook fastener membrane to the wall, and then releasably engaging the complementary loop fastener elements of the wall covering with the fastener elements of the hook fastener membrane. The wall of the building is an exterior wall and the wall covering is a siding material. The first object is a subfloor of a building, the second object is a floor covering, the method including securing the hook fastener membrane to the subfloor, and then releasably engaging the complementary loop fastener elements of the floor covering with the fastener elements of the hook fastener membrane. The first object is a roof of a building, the second object is a roof covering, the method including securing the hook fastener membrane to the roof, and then releasably engaging the complementary loop fastener elements of the roof covering with the fastener elements of the hook fastener membrane. The roof covering is a shingle. The second object is a strap, the method including covering an item with the hook fastener membrane and then releasably securing the hook fastener membrane in place by releasably engaging the complementary loop fastener elements of the strap with the fastener elements of the hook fastener membrane. The first object is a sheet of insulating material, the second object is a building structure, the method including securing the hook fastener membrane of the insulating material to engageable loops disposed on the building structure. The hook fastener membrane of the first object is a vapor barrier, the second object is a building structure, the method including securing the vapor barrier to the building structure by releasably engaging the complementary loop fastener elements of the building structure with the fastener elements of the hook fastener membrane.

Any of the variations of this aspect of the invention can also include one or more of the following features. The hook fastener membrane is permanently stretched only in a direction corresponding to its width. The thermoplastic resin of the hook fastener membrane is biaxially oriented. The base layer has a thickness less than about 0.13 mm (0.005 inch). The hook fastener elements are discretely molded hook-shaped projections. The hook fastener membrane has a width of at least 1.5 meters (5 feet). The fastener elements are present at density of at least about 300 elements per square inch generally over the one side of the base of the hook fastener membrane. The thermoplastic resin is selected from the group consisting of polypropylene, polyethylene terephthalate, polyethylene and nylon, copolymers thereof, and compatible mixtures thereof with each other or with other compatible materials. The plastic resin includes a biocide or fungicide capable of preventing growth of biological material such as mold or fungus, or a U.V. absorbing additive or a fire repellant or other repellant or agent to protect the membrane or objects with which it is associated from deterioration or damage. The hook fastener membrane is permeable to a selected environmental fluid such as water, vapor or air.

In another broad aspect of the invention, a method of affixing in a protective covering to a building exterior including (a) securing a hook fastener membrane to the building exterior, the hook fastener membrane including a base layer of thermoplastic resin and an array of hook fastener elements formed contiguously of the thermoplastic resin of the base, the hook fastener elements extending from a broad surface of the base; and (b) engaging complementary loop fastener elements of the protective covering to the fastener elements of the hook fastener membrane to releasably secure the protective covering to the building exterior; (c) is characterized in that the base layer of the hook fastener membrane is a permanently stretched sheet having a width of at least 61 cm (2 feet), a length greater than its width and a thickness of less than about 0.38 mm (0.015 inch).

In another broad aspect of the invention a method of affixing a decorative covering to a building interior including (a) securing a hook fastener membrane to the building interior, the hook fastener membrane including a base layer of thermoplastic resin and an array of hook fastener elements formed contiguously of the thermoplastic resin of the base, the hook fastener elements extending from a broad surface of the base; and (b) engaging complementary loop fastener elements of the decorative covering to the fastener elements of the hook fastener membrane to releasably secure the decorative covering to the building interior; (c) is characterized in that the base layer of the fastener membrane is a permanently width-wise stretched sheet having continuous length, a width of at least 61 cm (2 feet) and a thickness of between about 0.025 mm (0.001 inch) and 0.38 mm (0.015 inch).

In another broad aspect of the invention, a method of enclosing a space including (a) providing a hook fastener membrane including a base layer of thermoplastic resin and an array of hook fastener elements formed contiguously of the thermoplastic resin of the base, the hook fastener elements extending from a broad surface of the base; (b) providing a support structure including complementary loop fastener elements; and (c) securing the hook fastener membrane to the support structure by engaging the hook fastener elements with the loop fastener elements to thereby enclose the space defined by the support structure; (d) is characterized in that the base layer of the fastener membrane is a permanently stretched sheet having a width of at least 61 cm (2 feet), a length greater than its width and a thickness of less than about 0.38 mm (0.015 inch).

In another broad aspect of the invention, a method of securing a protective cover about an object including (a) placing the protective cover about the object, the protective cover including a hook fastener membrane including a base layer of thermoplastic resin and an array of hook fastener elements formed contiguously of the thermoplastic resin of the base, the hook fastener elements extending from a broad surface of the base; and (b) securing the protective cover about the object with straps having complementary loop fastener elements for engagement with the hook fastener elements; (c) is characterized in that the base layer of the fastener membrane is a permanently stretched sheet having a width of at least 61 cm (2 feet), a length greater than its width and a thickness of less than about 0.38 mm (0.015 inch).

In another broad aspect of the invention, a method of removably securing a flooring material to a subfloor including (a) permanently attaching an intermediate flooring layer to the subfloor, the intermediate flooring layer having a base with a first broad surface and an opposite, second broad surface, the first broad surface having a dispersion of fastener elements available for engagement, the second broad surface being disposed for attachment to the subfloor; (b) providing flooring material having an attachment surface and an opposite flooring surface, the attachment surface bearing a complementary loop fastener material engageable by the fastener elements of the intermediate flooring layer; and (c) releasably engaging the complementary fastener material of the flooring material with the fastener elements to removably secure the flooring material to the subfloor; (d) is characterized in that the first broad surface of the base and the fastener elements are formed integrally of the same thermoplastic resin the first broad surface being a permanently stretched sheet having a width of at least 61 cm (2 feet), a length greater than its width and a thickness of less than about 0.38 mm (0.015 inch).

Variations of this aspect of the invention can include one or more of the following features. The intermediate flooring layer further comprises a backing material laminated to the second surface of the membrane for attachment to the subfloor. The step of permanently attaching the intermediate flooring layer to the subfloor comprises at least one of stapling, nailing or screwing. The backing material comprises a dimensionally stable material such as pressboard or foamed or unfoamed plastic, such as polyvinyl chloride. The step of permanently attaching the intermediate flooring layer to the subfloor further comprises uncoiling the intermediate layer from a storage roll and positioning the intermediate layer for attachment to the subfloor. The flooring material comprises tiles. The tiles have marginal portions shaped for interlocking with adjacent like tiles to aid tile alignment during installation and to avoid gapping between adjacent tiles during use. The composite flooring fastener is in rolled form. The dimensionally stable material has a plurality of parallel slits across its width to provide flexibility and to allow the composite flooring fastener to be rolled. The hook fastener elements have stems of tapered profile, tapering outwardly from a relatively wide base at the base layer to a smaller dimension and being of thermoplastic resin integral with the base layer, the hook fastener elements being exposed for engagement with complementary hook-engageable material for securing to the membrane and being present at density of between about 50 to 5000 fastener elements per square inch generally over the first broad surface of the membrane.

According to another broad aspect of the invention, a water-impermeable roof membrane is provided which is constructed and arranged to serve as an important structural element of roofing, having a lower surface that has properties suitable for being applied, directly or via an intervening layer, to a rough roof. In important cases, a broad surface of the membrane that bears hook or other fastener elements is adapted to be directed upwardly, for engagement with compatible fastener material associated with outer roof elements such as shingles, roof tiles or exterior decking that overlie the roof membrane. In important cases, the roof membrane is associated with waterproofing material at its lower surface, for instance the roof membrane constituting, or being provided with a layer of, waterproofing material or adhesive. In important instances a pressure-sensitive adhesive coating is provided upon the lower surface of the base layer of the membrane (with or without an intermediate layer), the membrane is rolled upon itself in a supply roll and the upper surface of the fastener elements of the membrane is of substance and configuration permitting releasable engagement with the pressure-sensitive adhesive, or a release layer is interposed.

In another aspect, the invention features a roof membrane comprising a base layer of thermoplastic resin, over at least one broad surface of which is disposed a preferably wide dispersion of discrete hook elements, the hook elements being of thermoplastic resin integral with the base layer and available for engagement with hook-engageable material for securing to the membrane, the membrane having a lower surface having properties suitable for being applied to a roof, and the broad surface of the roof membrane being adapted to be directed upwardly, presenting upwardly-directed hooks for securing engagement with loop material associated with outer roof elements such as shingles, roof tiles or exterior decking. Preferably this base layer comprises a permanently width-wise stretched or a biaxially-stretched or oriented plastic sheet. In particular embodiments the resin includes a biocide or fungicide, and the membrane has a layer of waterproofing material or pressure-sensitive adhesive adhered to its lower surface.

According further to the invention, an installed roof is provided comprising a roof membrane of one of the forms described, installed upon a roof structure, and outer roof elements such as roof tiles, shingles or exterior decking having at least under surface portions comprised of compatible fastener material are engaged with fasteners of the upper surface of the roof membrane for securing the roof elements in place.

In another aspect of the invention, a roof is provided comprising a roof structure having a supporting surface carrying roof elements such as roof tiles, shingles or exterior decking, a fastener-bearing membrane is joined to either (1) the supporting surface of the roof or (2) at least under-surface portions of the roof elements, while a compatible fastener material having fastener elements engaged by the fastener elements of the membrane is joined to the other of the supporting surface or the undersurface portions of the roof elements.

According to another broad aspect of the invention, an exterior building wrap material is provided comprising a fastener-bearing membrane which is permeable to moisture vapor but impermeable to wind, the membrane being sized to be wrapped about portions of a building and having fastener elements disposed to be engaged by complementary fastener material to secure the wrap material to other components of the building. In certain embodiments, the exterior building wrap material has integral fastener elements that are adapted to face inwardly of the building to engage and be supported by complementary fastener material previously fastened to the building structure. In these and other important embodiments, the exterior building wrap material has fastener elements adapted to face outwardly of the building for engagement by complementary fastener strips for securing the wrap material to the building or to complementary fastener material on the inwardly facing surface of other building elements such as insulation or wall board or exterior siding material, the building wrap material supporting, at least in part, the other building elements.

In another aspect, the invention features an exterior building wrap membrane comprising a base layer of thermoplastic resin, over at least one broad surface of which is disposed a preferably wide dispersion of discrete hook elements, the hook elements being of thermoplastic resin integral with the base layer and available for engagement with hook-engageable material for securing to the membrane, the membrane being impermeable to wind, the hook elements being disposed to be engaged by loop material for fastening. Preferably, the base layer of this building wrap membrane comprises a permanently width-wise stretched plastic sheet, in certain cases being a biaxially-stretched or biaxially-oriented plastic sheet.

According further to the invention, a building at least partially wrapped by an exterior building wrap material is provided in which elements of the building wrap material dispersed over its interior surface lie against sheathing of the building and define therewith relatively isolated insulative air spaces, pockets or cells. In these and other cases, a building is provided which is wrapped by an exterior building wrap material according to the invention in which fastener elements dispersed over the exterior surface of the building wrap material face outwardly of the building and are engaged by complementary fasteners on fastener strips for securing the wrap material on the building, or by compatible fastener material associated with the inner surface of other building material such as siding or insulation or wall board which is at least partially supported by fastener elements of the membrane.

In another aspect of the invention, a building is provided having its exterior surface at least partially covered by a building wrap material, a membrane as described above either serving the role of being secured to the exterior surface of the building with fastener elements facing outwardly, or inwardly, or both, and a complementary fastening material having fastener elements engaged by the fastener elements of the membrane serves the complementary fastening role not served by the membrane.

According to another broad aspect of the invention, an insulation product is provided in which a fastener-bearing membrane forms at least part of a surface or outer cover of a batt, or of a portion of a roll, or a sheet or board of building insulation, which may be thermal insulation or sound insulation, or both. The insulation is disposed within a cover formed by the membrane or laminated to the membrane, and the fastener elements of the membrane are exposed on the exterior of the batt or portion of the roll or sheet or board of insulation in regions engageable with complementary fastening material disposed in stud, joist or rafter cavities or against building surfaces for securing the batt or portion of the roll or sheet or board of insulation in place.

In another aspect, the invention features a batt, roll, sheet or board of building insulation adapted for heat or sound insulation purposes, comprising insulation disposed within or against an outer cover, the outer cover comprising, at least in part, a base layer of thermoplastic resin and, disposed over at least one broad surface of the membrane, a wide dispersion of discrete hook elements. The hook elements are of thermoplastic resin integral with the base layer and are available for engagement with hook-engageable material for securing to the membrane. The hook elements of the membrane are exposed on the exterior of the batt, roll, sheet or board of insulation in regions engageable with loop material disposed in stud, joist or rafter cavities or against surfaces for securing the batt, portions of the roll, sheet or board of insulation in place. Preferably, the base layer comprises a permanently width-wise stretched plastic sheet, in certain cases being a biaxially-stretched or a biaxially-oriented plastic sheet.

In another aspect of the invention, an insulated structure is provided comprising a batt, portion of a roll, sheet or board of building insulation as described disposed between wall studs, joists or rafters or against surfaces of a building structure and engaged upon areas of complementary fastener material secured to the studs, joists, rafters, or surfaces of other building materials.

In another aspect, an insulated structure is provided, comprising building surfaces or cavities defined by studs, joists, rafters or building material, with batts or portions of rolls, sheets or boards of building insulation disposed against the surfaces or within the cavities, a membrane as described either serving the role of a cover for the building insulation, or the role of providing fastener surfaces of the cavities or surfaces, to which the building insulation is secured, and a complementary fastener material having fastener elements engageable by the fastener elements of the membrane serves in the other fastening role not served by the membrane.

According to another broad aspect of the invention, a wallboard or panel is provided, which may be e.g., gypsum board, wall board, blue board or insulation board, or a preformed wood or synthetic panel comprising a planar member to at least one side of which is joined a permanently width-wise stretched plastic sheet, in some cases being a biaxially-stretched or a biaxially-oriented plastic sheet having the features as described, preferably the broad surface of the membrane carrying the fastener elements being directed outwardly.

In another aspect, the invention features such a wallboard or panel comprising a planar member to at least one side of which is joined a membrane comprising a base layer of thermoplastic resin, and disposed over at least one broad surface of the membrane is a dispersion of discrete hook elements, the hook elements having a tapered profile, tapering from a relatively wide base at the base layer to relatively narrow crook portions, and being of thermoplastic resin integral with the base layer and available for engagement with hook-engageable material for securing to the membrane, the broad surface of the membrane which carries the hook elements being directed outwardly. In preferred embodiments, the base layer comprises a permanently width-wise stretched plastic sheet, in certain cases being a biaxially-stretched or a biaxially-oriented plastic sheet.

Another embodiment is a wall board or building panel having a planar surface to at least one side of which is joined a membrane comprising a base layer of thermoplastic resin, over at least one broad surface of the membrane there being a dispersion of hook-engageable loops, the loops being directed outwardly, available for engagement with hook for securing to the membrane. In preferred embodiments, the base layer comprises a permanently width-wise stretched or a biaxially-stretched or biaxially-oriented plastic sheet. In preferred embodiments, the loop material is provided by a needled nonwoven of staple fibers which subsequent to needling, has been substantially stretched and bonded from the back in that state.

According to another broad aspect of the invention, a wall or ceiling covering is provided in the form of wallpaper, fabric, paneling or insulation having a decorative side and an oppositely directed side, and to the latter side is joined a permanently width-wise stretched plastic sheet, in certain cases the sheet being a biaxially-stretched or a biaxially-oriented plastic sheet, the fastener elements of the sheet being directed inwardly for attachment to a complementary fastener surface disposed on a supporting wall or ceiling structure.

In another aspect, the invention features a wall covering comprising wallpaper, fabric, paneling or insulation having a decorative side and an oppositely directed side to the latter of which is joined a membrane comprising a base layer of thermoplastic resin. Disposed over at least one broad surface of this membrane is a dispersion of discrete hook elements, the hook elements having a tapered profile from a relatively wide base at the base layer and being of thermoplastic resin integral with the base layer and available for engagement with hook-engageable material for securing to the membrane, the hook elements of the membrane being directed inwardly for attachment to a loop surface disposed on a supporting wall. In preferred embodiments the base layer comprises biaxially-oriented plastic sheet.

In another aspect of the invention, a wall is provided which is defined by an extended supporting surface carrying a wall covering, and a permanently width-wise stretched or a biaxially-oriented plastic membrane is joined to either (1) the supporting surface of the wall or (2) the wall covering, while a compatible fastener material engaged by the fastener elements of the membrane is joined to the other of the supporting surface or wall covering. In particular embodiments ofthis aspect of the invention, the supporting surface comprises wallboard or a building panel, and complementary membranes having features according to the invention are on both of its sides.

Another embodiment of the invention is a wall defined by an extended supporting surface carrying a wall covering. There is a membrane having a base layer of thermoplastic resin, over at least one broad surface of which is a dispersion of discrete hook elements of profile that tapers outwardly from a relatively wide base at the base layer, being of thermoplastic resin integral with the base layer, these hook elements being available for engagement with hook-engageable material for securing to the membrane. The membrane is joined to either (1) the supporting surface of the wall or (2) the wall covering, while a loop material capable of being engaged by the hook elements of the membrane is joined to the other of the supporting surface or wall covering. In preferred embodiments the base layer comprises a permanently width-wise stretched plastic sheet, in certain cases it being a biaxially-stretched or a biaxially-oriented plastic sheet.

Another embodiment of the invention comprises an installed ceiling defined by an extended supporting surface carrying a ceiling covering comprising wall paper, fabric, ceiling tile or ceiling sound or thermal insulation, and a permanently width-wise stretched membrane, in certain cases being a biaxially-stretched or a biaxially-oriented plastic membrane, is joined to either (1) the supporting surface of the ceiling or (2) the ceiling covering, while a compatible fastener material capable of being engaged by the fastener elements of the membrane is joined to the other of the supporting surface or ceiling covering. Complementary membranes having features according to the invention may be respectively on both of these surfaces.

Another embodiment is an installed ceiling defined by an extended supporting surface carrying a ceiling covering comprising wall paper, fabric, ceiling tile or ceiling sound or thermal insulation. There is a membrane having a base layer of thermoplastic resin, over at least one broad surface of which is a dispersion of discrete hook elements of profile that tapers outwardly from a relatively wide base at the base layer and being of thermoplastic resin integral with the base layer, and available for engagement with hook-engageable material for securing to the membrane. The membrane is joined to either (1) the supporting surface of the ceiling or (2) the ceiling covering, while a loop material capable of being engaged by the hook elements of the membrane is joined to the other of said supporting surface or ceiling covering. In preferred embodiments the base layer comprises a permanently width wise stretched plastic sheet, in certain cases being a biaxially-stretched or a biaxially-oriented plastic sheet.

According to another broad aspect of the invention, a floor membrane is provided comprising a permanently width-wise stretched plastic membrane, in certain cases a biaxially-stretched or biaxially-oriented plastic membrane, the floor membrane having a lower surface that has physical properties suitable for being joined to a subfloor (either directly or via an intervening layer), the broad surface of the floor membrane being adapted to be directed upwardly, presenting upwardly directed fastener elements for engagement with complementary fastener elements associated with a finished floor material such as ceramic, vinyl or cork tile, wood flooring (in particular, hardwood flooring strips) or carpeting.

In preferred embodiments a water-proofing material or pressure-sensitive adhesive layer is joined to or forms part of the membrane.

Another embodiment of the invention is a floor membrane comprising a base layer of thermoplastic resin, over at least one broad surface of which is a dispersion of discrete hook elements having a profile that tapers outwardly from a relatively wide base at the base layer and being of thermoplastic resin integral with the base layer, the hook elements being available for engagement with hook-engageable material for securing to the membrane. The membrane has a lower surface having physical properties suitable for being joined to a subfloor, and the broad surface of the membrane is directed upwardly, presenting upwardly directed hook elements for engagement with loops associated with a finished floor material such as ceramic, vinyl or cork tile, wood flooring (in particular, hardwood flooring strips) or carpeting. In preferred embodiments the base layer comprises a permanently width-wise stretched plastic sheet, in certain cases being a biaxially-stretched or a biaxially-oriented plastic sheet.

In another embodiment, a floor comprises a subfloor, at least one layer of water proofing material or adhesive substance is adhered to the subfloor, and a membrane is secured or laminated to the at least one layer of waterproofing material or adhesive substance, the membrane comprising a permanently width-wise stretched plastic sheet, in certain cases a biaxially-stretched or a biaxially-oriented plastic sheet having its broad surface carrying fastener elements directed upwardly, and the flooring material having compatible fastener material on its under surface engaged with fastener elements of the broad surface. In certain preferred embodiments, the flooring material respectively comprises ceramic tile, a composition tile such as vinyl or cork tile, a wood flooring such as oak flooring strips, or carpeting. In certain cases the floor is that of a tent, a sales booth, a commercial display, a TV or movie set, a theatrical stage, or other temporary or low-cost structure.

Another embodiment of the invention is an installed floor comprising a subfloor, preferably at least one layer of waterproofing material or adhesive substance adhered to the subfloor, a membrane secured or laminated to the at least one layer of waterproofing material or adhesive substance, or directly to the subfloor the membrane comprising a base layer of thermoplastic resin, over at least one broad surface of which is a dispersion of discrete hook elements that have a profile that tapers from a relatively wide base at the base layer and being of thermoplastic resin integral with the base layer, the hook elements being available for engagement with hook-engageable material for securing to the membrane. The membrane has its broad surface carrying the hook elements directed upwardly, and the flooring material has hook-engageable loop material on its under surface engaged with the hook elements of the broad surface. In preferred embodiments the base layer comprises a permanently width-wise stretched sheet, in certain cases being a biaxially-stretched or a biaxially-oriented plastic sheet.

According to another broad aspect of the invention, a protective membrane bearing a dispersion of fasteners, preferably one component of a hook and loop fastening, is constructed and arranged to form a flexible exterior cover impermeable to water, such as rain or ground water. In certain embodiments, a flexible exterior cover impermeable to water comprises a base layer of thermoplastic resin, over at least one broad surface of which is a dispersion of discrete hook elements of thermoplastic resin that are integral with the base layer and available for engagement with hook-engageable material for securing to the membrane. Preferably, the base layer comprises a permanently width-wise stretched plastic sheet, in certain cases being a biaxially-stretched or a biaxially-oriented plastic sheet. In certain embodiments, the exterior cover is in the form of a ground cover, typically black or dark green, adapted to resist deterioration when exposed to sun light. In certain cases, the exterior cover is constructed in the form of a greenhouse cover or a roof material, the cover or roof material being at least translucent, capable of transmitting a substantial fraction of incident light. In certain cases a greenhouse or other roof comprises one or more roof supports having fastener material on the supports and two portions of membrane as described. One of the portions of membrane comprises an exterior layer, having its fastener elements directed inwardly, and engaged upon an outer portion of the fastener material on the one or more roof supports, while the other of the portions or membrane comprises an interior layer, having its fastener elements directed outwardly and engaged upon an inner portion of fastener material on the one or more roof supports.

Another embodiment of the invention is a greenhouse or other roof comprising one or more roof supports having loop material on its exterior and two portions of membrane each comprising a base layer of thermoplastic resin over at least one broad surface of which is a dispersion of discrete hook elements of thermoplastic resin integral with the base layer and available for engagement with hook-engageable material for securing to the membrane. One of the portions of membrane comprises an exterior layer, having its hook elements directed inwardly, and engaged upon an outer portion of loop material on one or more of the roof supports. The other of the portions of membrane comprises an interior layer, having its hook elements directed outwardly and engaged upon an inner portion of loop material on one or more of the roof supports. In preferred embodiments the base layer comprises a permanently width-wise stretched or a biaxially-oriented plastic sheet.

Another embodiment of a fastener-bearing protective membrane is a flexible exterior cover impermeable to water which is sized, constructed and arranged as a tarpaulin, and which is associated with straps comprised of compatible fastener material, the tarpaulin or the straps at least being stretchy.

Other embodiments of flexible exterior covers having fastener features as described include: a protective cover for shrubs, trees, plant material, pallet loads or packages such as gifts to protect the object covered during shipping or storage, the protective cover sized and shaped to be wrapped about the object and secured by compatible fastener material engaged upon the fastener elements of the cover; a boat or vehicle cover comprising the exterior cover sized and shaped to be wrapped about the boat or vehicle and secured by loop material engaged upon the fastener elements of the cover; the exterior cover sized and constructed as an agricultural cover to cover agricultural objects such as the ground around growing plants, protective cover for tobacco plants, hay bales, straw stacks, ensilage, farm machinery, or earth; a geotextile comprising an exterior cover of the type described, sized and constructed for use in diverting or containing water or preventing erosion or surrounding drain pipe as in a so-called French drain installation; or a swimming pool cover sized and constructed to cover a swimming pool.

Another embodiment of the invention comprises an upholstered object of furniture or the like, an inner cover comprising a membrane having fastener features as described, secured over the object with the fastener elements directed outwardly, and an outer material (such as finished upholstery fabric) having compatible fasteners (such as loops of the fabric) directed inwardly and engaged with fastener elements of the membrane generally over the exterior of the object.

Another embodiment of the invention is a moving pad or blanket comprising a broad layer of padding or filling and a cover on the padding or filling, the cover comprising a membrane having fastener elements as described, the fastener elements being exposed to be engaged by compatible fastener elements for securing it in place. In preferred embodiments, the moving pad or blanket includes straps of compatible fastener material capable of engaging the fastener elements of the moving pad or blanket, with at least the membrane or the straps being stretchy.

Another embodiment is a moving pad or blanket comprising a broad layer of padding or filling and, on the padding or filling, a cover membrane comprising a base layer of thermoplastic resin, over at least one broad surface of the membrane there being a dispersion of discrete hook elements of thermoplastic resin integral with the base layer and available for engagement with hook engageable material for securing to the membrane, the hook elements of the membrane being generally distributed over the exterior of the object. Preferably the base layer comprises a permanently width-wise stretched sheet, in certain cases being a biaxially-stretched or a biaxially-oriented plastic sheet and preferably the moving pad or blanket is associated with straps of loop material capable of engaging the hook elements of the moving pad or blanket, preferably at least the membrane or the loops being stretchy.

In another embodiment, an insulation blanket comprises a blanket of insulating material covered on at least one side with the protective membrane comprising a base layer of thermoplastic resin, over at least one broad surface of which is a dispersion of discrete hook elements of thermoplastic resin that are integral with the base layer and available for engagement with hook-engageable material for securing to the membrane. Preferably, the base layer comprises a permanently width-wise stretched plastic sheet, in certain cases being a biaxially-stretched or a biaxially-oriented plastic sheet.

According to another aspect of the invention, there is provided a method of making a protective membrane product of selected properties as described, which comprises continuously forming a layer of plastic with integral molded projections by use of a rotating mold roll, thereafter heating and stretching the plastic layer at least width-wise to substantially increase the width of the membrane and introduce molecular orientation, and thereafter sizing, cutting and arranging the membrane so that it is constructed and arranged to serve as the protective membrane product, the steps of molding and stretching being cooperatively related to provide the selected properties. In some cases, after forming the membrane, it may be permanently stretched both width-wise and length-wise. This stretching action may produce a desired permanent biaxial orientation of the molecules of certain resins, under certain conditions of treatment. The method of making a membrane can employ any of the processes disclosed in the following specification or in the prior U.S. patent applications and patents which have been incorporated by reference.

Another aspect of the invention is the method of making a protective or barrier membrane product of selected properties comprising continuously forming a layer of plastic of selected resin with integral projections by use of a rotating mold roll having mold cavities of preselected dimensions, thereafter heating and stretching the layer at least width-wise, substantially increasing the width of the membrane, and thereafter sizing, cutting and arranging the membrane into the form of the selected product, the steps of forming and stretching being cooperatively related to provide the selected properties.

Preferred embodiments have one or more of the following features.

The method includes the step of treating the formed layer of plastic to render it permeable to a selected degree.

The method includes punching the formed sheet, preferably the punching being produced by electrical discharge punching, laser punching, pin roll punching, needling or treatment of the sheet with a beam of energetic electrons.

Other features and advantages will be apparent from the following detailed description, claims, and attached drawings, and from the disclosures of our prior U.S. patent applications and patents which have been incorporated by reference above.

### Brief Description of the Drawings

Figs. 1 and 2 illustrate a method of fabricating a membrane for products of the invention.
Fig. 3 illustrates a roofing material membrane.
Fig. 3A is a cross-sectional view taken along line 3A-3A of Fig. 3.
Fig. 3B is a cross-sectional view similar to that of Fig. 3A illustrating an alternate arrangement of the roofing membrane of Fig. 3
Fig. 4 is a cross-sectional view of roofing shingles secured to the roofing membrane of Fig. 3 that has been affixed to a roof, while Fig. 4A is a magnified view of a portion of Fig. 4.
Fig. 5 is a cross-sectional view of one embodiment of a roofing shingle.
Fig. 6 illustrates a membrane used to secure flooring materials.
Figs. 7, 7A and 7B diagrammatically illustrate methods of fabricating composite flooring fasteners incorporating flooring fastener membranes similar to that of Fig. 6.
Fig. 8 illustrates an alternate flooring fastener member used to secure flooring materials.
Fig. 9 illustrates the flooring fastener member of Fig. 8 being used to secure flooring material to a subfloor.
Fig. 10 illustrates a flooring fastener composite in an uninstalled, roll form.
Fig. 11 illustrates the flooring fastener composite of Fig. 10 in an unrolled state capable of receiving a mating flooring material.
Fig. 12 illustrates an alternative embodiment of the flooring fastener composite of Fig. 10.
Fig. 13 illustrates an apparatus and method for forming the flooring fastener composites of Figs. 10 and 12.
Fig. 14 illustrates a membrane used as a protective exterior structural wrap.
Fig. 15 and 15A are cross-sectional views of stages of securing structural members to a hook-presenting membrane affixed to a structure.
Fig. 16 illustrates a membrane used to install insulation in a structure.
Fig. 17 is a cross-sectional view of a membrane used for wallboards and insulation while Fig. 17A is a magnified view of a portion of Fig. 17.
Fig. 18 illustrates a hook-bearing membrane used to secure ceiling members.
Fig. 19 illustrates a membrane used to secure wall members.
Fig. 20 illustrates a membrane used as a protective tarpaulin.
Fig. 21 illustrates a membrane used in constructing a shelter.
Fig. 22 is a cross-sectional view of one embodiment of a support member for a shelter having the membrane of Fig. 21.

Like reference symbolism the various drawings indicate like elements.

### Detailed Description of Embodiments

As previously indicated, protective membranes of substantial dimensions in both length and width carrying a field of fasteners, are formed by stretching a thermoplastic sheet, preferably after the hooks are molded integrally with the sheet or other fastener elements are joined to the sheet.

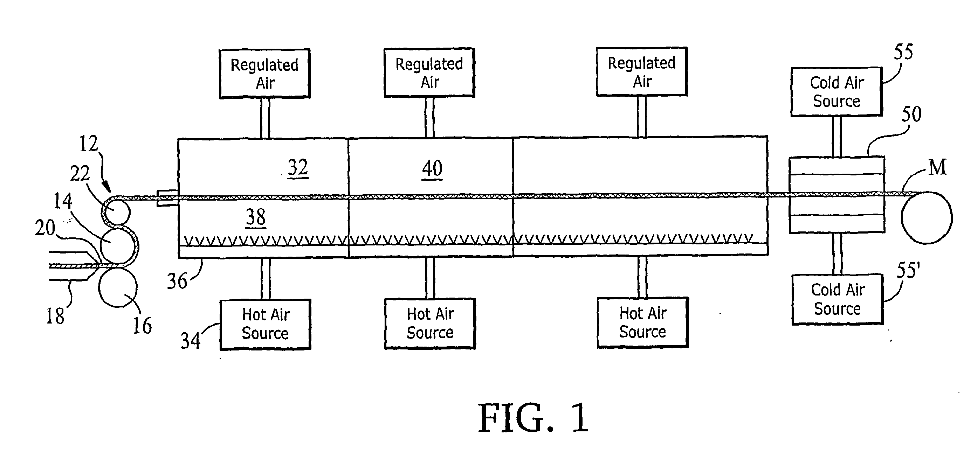

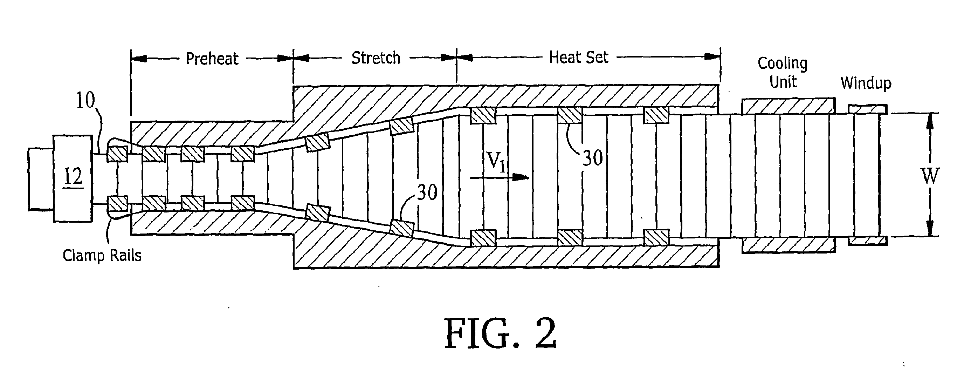

A protective membrane with integral hooks and having substantial dimensions in length and width, typically at least about two feet to about five feet, and often much more is formed generally according to the method disclosed in pending applications USSN 08/789,637, filed January 27, 1997, USSN 09/070,865, filed April 30, 1998, now U.S. Patent 6,035,498 and USSN 09/518,853, filed March 3, 2000, which are incorporated herein in their entirety. To briefly summarize, referring to Figs. 1 and 2, the membrane is preferably manufactured by pulling sheet-form molten resin from the die lips of an extruder, into a nip formed by two counter-rotating calendar rolls. At least one of them is a mold roll, which defines over it surface a field of tiny mold cavities e.g., of hook form suitable for hook and loop fastening. At the nip an extended field of hook-form fastener elements is molded on at least one surface of the thin membrane that is formed by the calendar rolls. As shown in Fig. 2, the sheet is then stretched width-wise up to 4 to 5 times its original width to produce a membrane having biaxially-oriented polymeric molecules, which provides strength to the stretched membrane. With suitable choice of resin and thickness for the particular application, the substantial width of the stretched membrane that is achievable by the process allows it to be constructed to serve as a protective barrier in the numerous novel uses and structures described here.

The membrane includes a base layer typically comprising a biaxially-oriented plastic sheet of thermoplastic resin. Depending upon the application, the resin used may be homo polypropylene, homo polyethylene terephthalate, homo nylon, and homo polyethylene, and copolymers and/or mechanical mixtures of these polymers. The resin is selected specially to achieve appropriate properties for the novel product. For example, for ceiling members (as described below), a polyethylene terephthalate resin may be preferred because of its hardness and the strong hooks it forms, capable of supporting vertical weight. For extremely wide membranes as used where seams are undesirable, a polypropylene resin is preferred because it is easy to stretch to great width. By choice of suitable resin and thickness, the thermoplastic resin base layer of the stretched membrane can act as a protective barrier that is air-impermeable and water-impermeable, or with properties specially tailored to the application.

Disposed over at least one broad surface of the membrane is a dispersion of fastener elements, in many cases, preferably discrete hooks for hook and loop fastening. As used herein, "hooks" broadly includes any hooking element, e.g., hooks with crooks, hooks of mushroom or palm tree shape, etc., that can engage with a compatible loop material, for example, a nonwoven, needled-loop material or a knitted or woven loop material. The hooks are typically present at a density of between about 25 to 2,000 hooks per square inch over at least one surface of the protective membrane, depending on the application for the membrane. The hooks, made of thermoplastic resin, preferably formed integral with the base layer, are available to engage with hook-engageable material, e.g., a layer of loops, for securing the material to the membrane. Thus, not only can the membrane of the invention serve as a fastener, but because of its substantial dimensions, the membrane can also serve as a protective membrane, for example, against water, air, pests, etc., with the added advantage of being able to secure hook-engageable materials thereon.

Other examples of techniques for forming loop engageable elements are those described in European patent application EP 0 852 918 A2 and subsequent corresponding patent publications, and in WO/00/00053, text and drawings of which are hereby incorporated by reference.

Where the protective membrane carries loop fastener elements, it is advantageous that a film of thermoplastic resin be formed by the well-known blown film method, to produce a biaxially oriented film, which is then laminated to a needled non-woven which has been extensively stretched, preferably biaxially, e.g., as described in USSN 08/922,292, filed September 3, 1997, USSN 09/262,159, filed March 3, 1999 and USSN 09/322,663, filed May 28, 1994, all incorporated by reference in their entirety. In other cases a preformed loop material can be introduced with molten resin into the nip of a pair of calendar rolls in which a plastic membrane is formed on the back of the loop fabric or loop perform, the composite then being stretched width-wise.

Generally, applications of the membrane of the invention are directed to broad area covers. The membrane is typically placed on an object with the hooks or other fasteners facing outward, away from the object. In some applications, additional material, such as shingles, having a mating layer, e.g., loop layer, secured to the membrane by engaging the loop layer to the hooks of the membrane. Depending on the application, the membrane is readily treated with an adhesive to secure the membrane to the object and to provide an added waterproofing layer. Additionally, the membrane or mating layer can include a biocide or fungicide, to prevent growth of biological material such as mold and fungus, or an ultraviolet absorbing agent to protect the membrane from deterioration. Specific novel products include but are not limited to, roofing material, flooring material, building wrap, insulation wrappings, ceiling material, wallpaper, tarpaulin, geotextiles, green house roofs, upholstered objects, moving pads, blankets and insulation blankets.

While only certain methods of fabricating the protective membrane have been disclosed above, it should be recognized that, within the broader aspects of the inventions protective membrane disclosed can be fabricated by other methods. For example, these methods can include extruding a sheet of molten plastic into a roller nip or a narrow gap formed by a nozzle shaped about a roller and subsequently stretching the sheet in both width and length directions after forming (with or without molecular orientation). Also the well-known "cut and stretch" method can be employed in which parallel ribs of hook profile, formed integrally with a base plastic layer, are repeatedly cut transversely without cutting the base layer and the base layer is then stretched in the axial direction of the ribs to separate the hook segments, as well as width-wise to provide the needed length and width for the membrane or sheet. Moreover, while the methods of application for the membrane describe below suggest placing the membrane on the object to be protected, it should be noted that, for appropriate applications, the placement of the membrane and the loop layer can generally be reversed, with the layer having loops disposed on the object to be protected.

Whereas one aspect of the invention is, in general, the concept of providing a novel protective membrane bearing a field of fasteners, produced by the techniques disclosed, other aspects of the invention concerns specific protective membranes and as well as the systems of employing them and specific combinations of the membranes with other elements that form novel end products and usages.

Generally, a protective membrane and the object to be secured to the hooks of the membrane can experience three types of forces: tension, peel, and shear. According to the invention, these properties are selected for a given membrane product, to accomplish the novel function for which that product is uniquely designed. For instance, ceiling coverings have hook fasteners that are constructed to be especially strong under tensile forces to support the attached ceiling tiles or other coverings. The hooks of roof membranes are constructed to be especially resistant to peeling forces, to securely attach roofing shingles. A wall-mounted membrane for supporting tiles on vertical walls have fastener elements especially constructed to be strong in shear, to support the tiles vertically.

Generally, the size of the cooperating loops depends on how much force the object will experience; and the size of the hooks is related to the size of the loops. For example, ceilings tiles may be secured with #24 hooks available from Velcro USA, Inc., Manchester, New Hampshire, while wall tiles may be secured with #3905 hooks available from Velcro USA, Inc.

Other special properties for specific membranes according to the invention depend upon their novel application, including thickness, width-wise stiffness and strength, color, and other properties relevant to the novel application. For example, if the membrane is used as a roofing material, the membrane may be black to better accommodate the effects of sunlight while a membrane specially constructed for a green house roof is typically translucent to pass the sun's rays.

### Novel Roofing Membrane

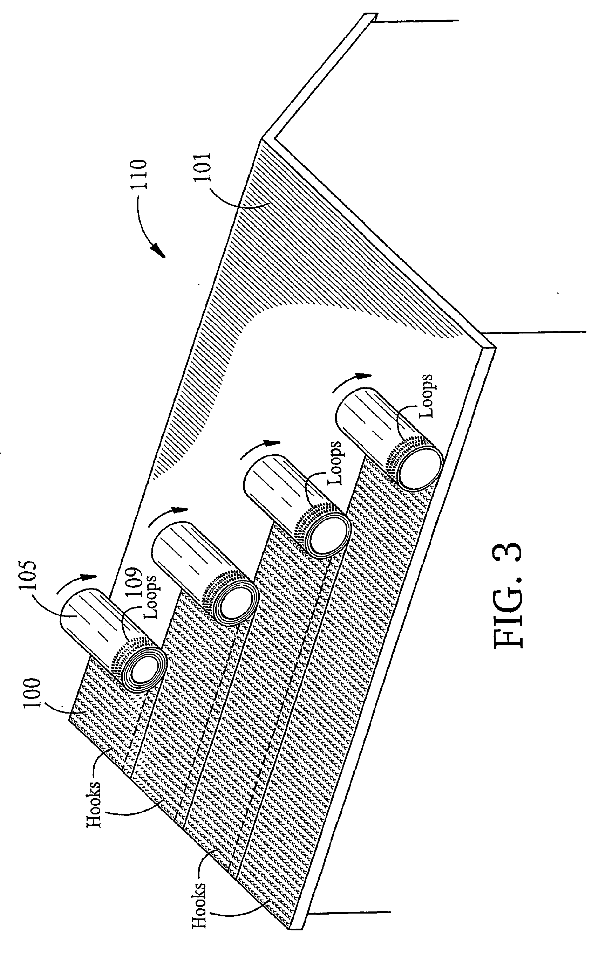

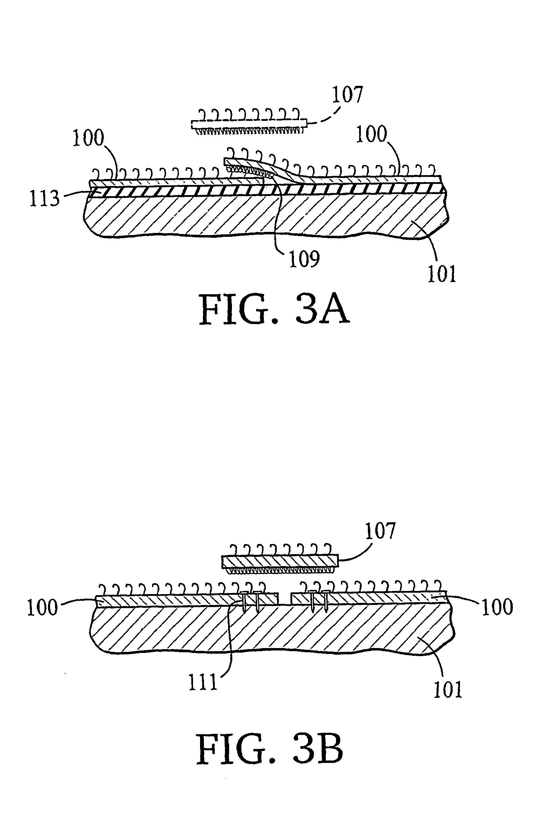

Referring to Fig. 3, the membrane 100 comprises a protective roofing material for a structure 110, such as a house or a building. The base sheet of membrane 100 is constructed to be an air-impermeable and water-impermeable protective barrier. It carries a uniform field of molded hooks over its upper surface, and, in the particular embodiment shown, an edge band of loop material along at least one edge of the downwardly facing side. This fastener hook-bearing underlayment is adapted for attaching roofing shingles. Roof membrane 100 is typically provided on a supply roll 105 and is rolled onto the roof 101, for example, like tarpaper, to cover the entire roof with the hooks facing up and away from the roof 101.

The membrane 100 can be affixed to the roof 101 by a number of advantageous methods, or combinations thereof In one example, the membrane 100 is pre-coated on its bottom surface with a pressure sensitive adhesive such as a rubber-based adhesive 113 that is compatible with the material of the roof 101, for bonding to the roof. Such adhesives can be chosen such that the membrane can be easily released when rolled upon itself, or a release sheet may be interposed between successive layers of membrane in the roll. Additionally, the adhesive can be selected to serve as an added waterproofing barrier, further protecting the structure from the effects of rain and wind. A sealing arrangement can be provided by applying material having a layer of loops on one surface and a layer of hooks on another surface, such as provided by strips 107 of Fig. 3A.

The membrane can also be mechanically affixed to the roof, for example, by staples and nails, 111, Fig. 3B. The seams between adjacent layers of membrane 100 can further be sealed with over-lying sealing strips 107 that protect against leakage at the locations of perforation points of the staples or nails.

Preferably the overlying sealing strips 107 have an under-surface of hook-engageable loops, and an upper surface of hooks, e.g., of density corresponding to that of the membrane 100. The under surface can include an adhesive sealant material which is penetrated by the hooks and forms a water-tight seal between the base layer of the membrane 100 and the base layer of strip 107, to complete the water-tight seal.

A self-joining strip 107 can be fabricated, for example, by laminating a layer of loops to the back of a preformed hook membrane. In another embodiment, material is introduced for forming the loops, e.g., loose fibers, with the molten resin feed that enters a forming nip, either by use of free fibers or a stretchy loop-defining fabric. Using either of these methods, after forming the base layer sheet with hooks on the opposite side at the forming nip, the composite can be stretched to a very thin base thickness since the layer of loop-forming fibers can stretch along with the base layer.

In a low cost method of producing a roof membrane, only outer edge margin of the back of a membrane is provided with loops, as shown in Fig. 3. The central region of the back of the sheet can carry, for example, a sealant or a tar paper layer, optionally impregnated with fire retardant or sealant substance to provide low-cost thickness and strength. The loop margin 109 of the sheet is disposed at the region of overlap of successive courses of the membrane, with the loops facing down to engage the hooks on the lower membrane course. The resultant membrane has hooks facing up throughout its entire extent to receive roofing elements, such as a shingles, tiles, and decking, as described below.

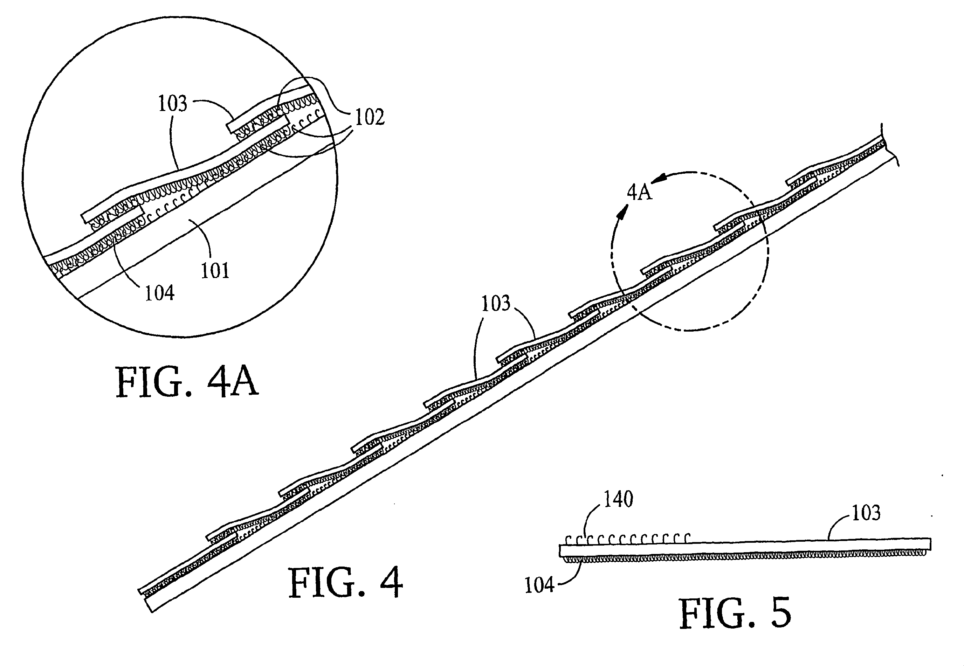

The membrane 100 of Fig. 3 can advantageously be covered with roofing elements such as a shingle 103, as shown in Fig. 4. Each shingle 103 has a specially provided under-surface comprising a layer of loops 104. Each shingle 103 is attached to the roof 101 by engaging the loops 104 of the shingle to the hooks of the membrane 100 (and/or the strip 107) on roof 101.

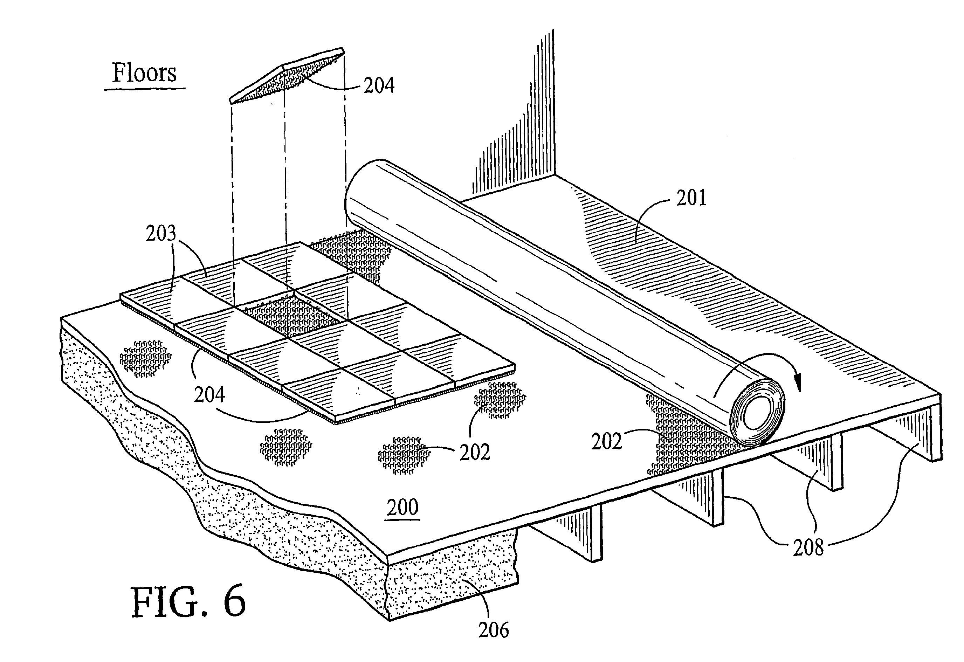

In one preferred embodiment, as shown in Fig. 5, shingle 103 further includes a band of hooks 140 disposed on the lower margin of the top surface of the shingle to be engaged by the layer of loops on the lower margin of the under-surface of the overlapping roofing element, see Fig. 4A The band of hooks 140, typically 1 or 2 inches wide, thus better secures the exposed edge of the shingle 103. In this way the shingles 103 positioned on the roof 101, are secured on their under-surface to the membrane 100 and to shingles they overlap, and in turn assist in securing the further shingles that overlap them.

In certain preferred embodiments of this aspect of the invention, fungicide or biocide is incorporated in the substance of the membrane or the loop.material to protect the roof 101 from organic growth.

### Novel Flooring

A flooring underlayment, in the form of a protective membrane is especially fabricated to secure finished flooring materials. The membrane carries hooks on its upper surface which are constructed to be strong in peel and shear, and the stretching of the membrane during its manufacture solves the problem of achieving a wide field of molded hooks in an economically practical manner in regard to cost of materials and the labor of placement. Flooring materials that may be secured to this novel underlayment include, but are not limited to, ceramic, vinyl and cork tiles; parquet blocks; hardwood flooring; and carpeting. In Fig. 6, a floor 201 is shown being completely covered with membrane 200, which has a uniform field of hooks 202 facing upwardly, away from the subfloor which is for example of concrete 206 or support beams 208. (Figure 6 is suggestive of the hooks but does not show their uniform dispersion over the entire floor which is the presently preferred embodiment). The membrane 200 covering the floor offers the advantages of sound insulation by providing a layer of air space defined by the hooks and loops and a uniform cushioning effect provided by the dispersion of upstanding hooks, e.g. avoiding the hard sensation and sounds that poured concrete subfloors 206 typically provide, see left side of Fig. 6. The membrane 200 can be coated with a permanent, strong adhesive to bond to the concrete 206 or plywood 208 subfloor material. The membrane 200 can serve to waterproof the floor and may include in its base layer additives that prevent fungi, mold, and other organic growth. In one example, the membrane 200 (or a laminated backing described below) includes a flame retardant additive to resist the spread of flames across or through a floor employing such a flooring membrane 200 Where temporary installation is desired, the membrane 200 can be coated with a temporary adhesive such that the flooring material and the membrane 200 can be easily removed or it may be temporarily nailed or stapled. This feature is useful for, e.g., a carpeted floor of a tent, a sales booth, a commercial display, a television or movie set, or a theatrical stage. The finished flooring materials 203, e.g., tiles or hardwood flooring are provided with a layer of hook-engageable loops 204 on their under-surface to engage with the hooks 202 of the membrane 200. When the flooring material is for instance a tile, the joints between the tiles can be grouted directly on the membrane 200.

In an alternative embodiment, the width-wise stretched and extended membrane underlayment provides an upwardly directed loop surface, and hooks are provided on the under surfaces of the finished floor elements.

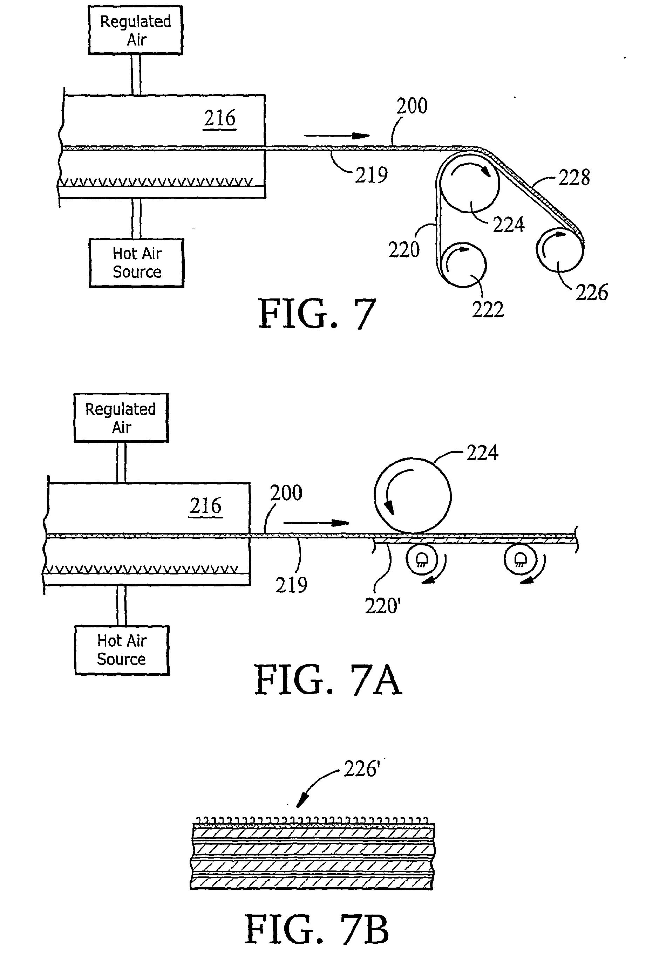

Also, as described in previously incorporated U.S. Patent 6,035,498, an added material can be laminated to the stretched membrane on the side opposite the fastener members. After forming and stretching the member, e.g., as described above with reference to Fig. 1, the added material is laminated to the membrane. As illustrated in Figs. 7, 7A and 7B, the stretched membrane is heated by heating unit 216 in such a manner that the fastener members are not appreciably deformed. With the back surface 219 of the web of the membrane in a heat-softened condition, added material 220 from a source spool 222, or rigid added material 220' in flat stock form (Fig. 7A) is brought into contact with the back surface of web 200 as the web is passed over a laminating roller 224 before being spooled on takeup roller 226 or accumulated as a stack 226' of flat sheets in the case of rigid added material 220'(Fig. 7B) for later use. In the embodiment of Fig. 7, the web 200, under a degree of tension, is trained about an arc of the laminating roll, which thereby exerts pressure between the web back surface 219 and the added material. As it cools and solidifies, web back surface 219 permanently adheres to added material 220 supplied from the laminating roller, to form a two-sided product 228 that may be many feet wide, with fastener members on one side and the added material on the other side.

For novel flooring underlayments, the added material can be, for example, a foam material which advantageously provides sound absorption qualities to the installed floor and also offers increased friction between the subfloor and the flooring membrane. In another example, rigid added material 220' (Figs. 7A and 7B) is pressboard to provide support to the membrane and to provide a stable surface for improved adhesion of the membrane to the subfloor. In yet another example, rigid backing material 220' is a foamed rigid plastic sheet, such as a foamed polyvinyl chloride sheet sold commercially under the tradename "Sintra"™.

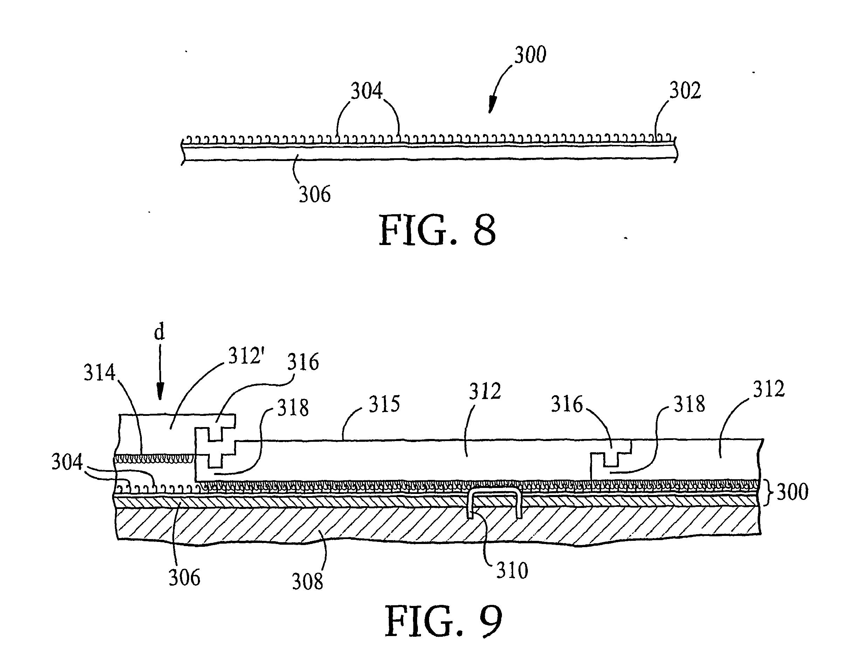

In one embodiment, illustrated in Figs. 8 and 9, a composite flooring underlayment 300 is provided having a stretched membrane 302 with exposed fastener elements 304 and a laminated pressboard backing 306. Composite flooring 300 is cut to a desired size and shape and secured to subfloor 308, e.g., of wood, by for example, staples 310. Tiles 312, e.g., of vinyl material, having fastener element-engageable loop material 314 on one broad surface opposite appearance surface 315 are provided for securement to composite flooring underlayment 300. Each tile 312 has a male key feature 316 present along two marginal edges (one such edge shown) and a female feature 318 present along two other marginal edges (one such edge shown). With loop material 314 facing fastener elements 304 of secured composite flooring 300, tile 312 is pressed against composite flooring 3700. Fastener elements 304 engage loop material 314 to secure tile 312 in the desired position. A like tile 312' having like features 316 and 318 is then pressed downward (in the direction of arrow d of Fig. 9), interconnected with secured tile 312, and secured to composite underlayment 300. Interconnection features 316 and 318 provide stability to maintain tight joints and secure adjacent tiles to prevent gaps from forming. The tile installation process is repeated until installation of the flooring is complete.

Each tile is thus releasably secured to the flooring underlayer and the flooring system provides easy installation, easy flooring material, e.g., tile removal and replacement, easy repair, e.g., removal and replacement of individual damaged tiles. The composite flooring underlayer also provides a flooring moisture barrier.

As described above, flooring fastener membranes of substantial dimensions in both length and width carrying a field of fasteners, are formed by stretching a thermoplastic sheet, preferably after the hooks are molded integrally with the sheet or other fastener elements are joined to the sheet.

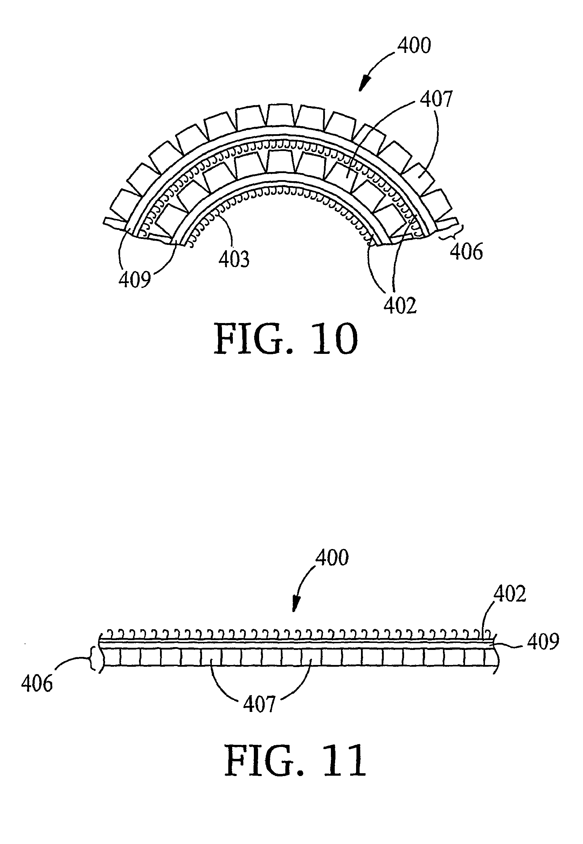

In one example, as illustrated in Figs. 10 and 11 composite flooring fastener 400 having flexible support layer 409 disposed between rigid backing 406 and stretched fastener membrane 402 is provided in roll-form for ease of storage, shipping and use. Rigid backing layer 406 is of a dimensionally stable, rigid material, e.g., masonite, glass filled plastic, wood, filled or unfilled and foamed or unfoamed thermoplastic or thermoset sheet, composites of wood and virgin or recycled plastic or other materials with similar properties.

Rigid backing layer 406 is slit laterally across its width, the slit extending through the rigid backing layer 406, but not extending through flexible support layer 909, which remains intact. The slitting of backing layer 406 allows composite flooring fastener 400 to be rolled in superposed form, as shown, despite the relative rigidity of backing layer 406, i.e., as composite flooring fastener material 400 is rolled, indvidiual slats 407 separate along the outer circumference of each rolled layer, while remaining attached in their relative positions to flexible support layer 409 along the inner circumference of each rolled layer. The separation of individual slats along an outer roll layer circumference allows rigid layer 406 to flexibly coil.

When composite fastener material 400 is unrolled, e.g., during installation to be fastened to a subfloor, spacing between adjacent individual slats 407 is eliminated. In the unrolled, e.g., installed condition, individual rigid slats 407 abut each other thereby supporting each other against any lateral loading that might be experienced by flooring composite 400. Together, individual slats 407 in their unrolled, abutting arrangement provide support for the stretched fastener membrane 402, any flooring material, decorative or otherwise, attached to membrane 402, and any loads experienced by the flooring material to prevent undesirable buckling or wrinkling of the installed flooring material. Additionally, if composite fastener material 400 is attached, e.g., by staples, adhesives, nails, or otherwise, to an associated underfloor, or if composite material constitutes a wall to wall flooring underlayment whereby abutting walls offer lateral support to the system, the rigid backing layer 406 in conjunction with the engagement of fastener members 403 with mating fastener material on an underside of the exposed flooring acts to prevent any movement of the exposed flooring relative to the underfloor.

Alternatively, fastener membrane 402 is an unstretched fastener product having fastener elements extending from a base. In this embodiment the base width, length, and thickness dimensions, and the spacing between adjacent fastener elements remain significantly unaltered after initial forming of the fastener product shape.

In either case, intermediate flexible support layer 409 is of, e.g., polyvinyl chloride, polypropylene, foamed polypropylene, polypropylene compound, thermoplastic elastomers, olefinic thermoplastic elastomers, thermoplastic polyurethane elastomers, or other materials, in a foamed or unfoamed condition. Layer 409 is provided to support stretched fastener membrane 402 (or an unstretched fastener membrane) on one broad surface and to adhere slit rigid backing material 406 on its opposite broad surface. Flexible support layer 409 can also provide additional desirable properties such as sound barrier, antibacterial/fungal treatment, moisture barrier, or flame retarding characteristics, depending on the material used and additives introduced or coatings applied.

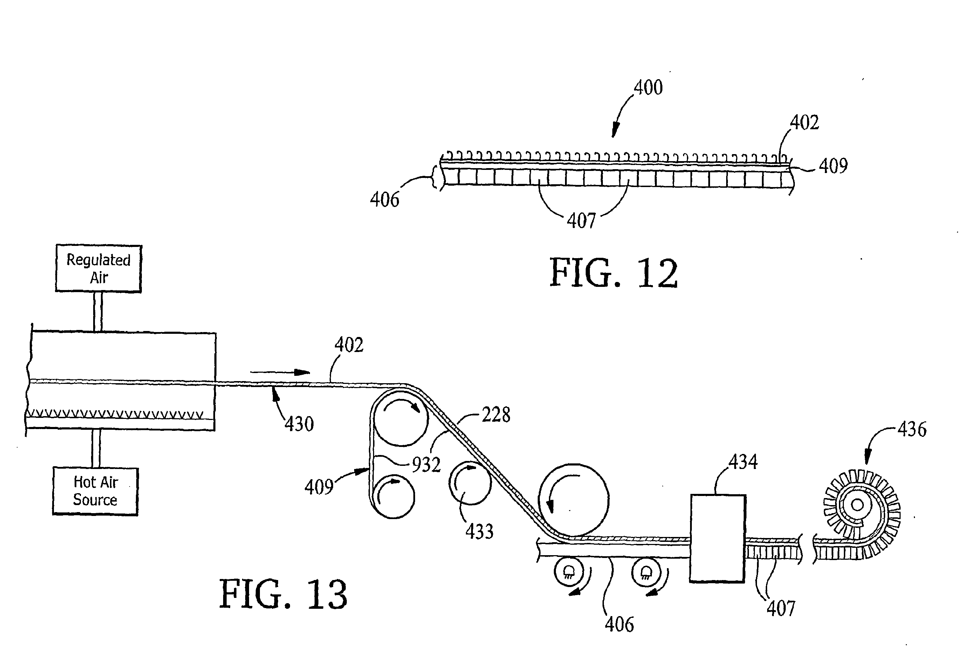

Alternatively, as illustrated in Figure 12, composite flooring fastener 400' has slit rigid backing material 406 bonded directly to stretched fastener membrane 402, i.e., intermediate flexible support layer 409 is eliminated. In this embodiment, fastener membrane 402 is of appropriate thickness after stretching to provide the necessary support to slit rigid backing material 406 in its flexed, rolled condition (Fig. 10) and in its unrolled, installed condition (Fig. 6) to support flooring an attached flooring material. As described above with reference to flexible support layer 409, the properties of fastener membrane 402 can be modified as desired by appropriate choice of material, additives, coatings or any combination of these constituents.

Tri-layered laminate 400 can be produced by a modification of the fastener membrane forming and backing layer laminating processes described above with reference to Figs. 1, 2, 7 and 7A As illustrated in Fig. 13, necessary modifications to the process to form composite fastener 400 include lamination of intermediate flexible support layer 409 to the non-fastener member bearing surface 430 of stretched fastener membrane 402. Attachment of rigid backing layer 406 to the exposed surface 432 of support layer 409 is achieved, for example, by an adhesive applied (e.g., by supplying adhesive to be wiped on by roller 433) or lamination by heat applied (e.g., by supplying heat through roller 433) to the undersurface of support layer 409 prior to bringing exposed surface 432 into contact with rigid backing layer 406. Rigid backing layer 406 is subsequently slit, at slitting station 434, the slitting being accomplished without severing support layer 409, to form individual, flex-providing slats 407. In another embodiment, intermediate support layer 409 and rigid backing layer are joined, e.g., by an adhesive or by lamination, prior to attachment to fastener membrane 402. The pre-joined rigid backing layer can be slit prior to or after attachment of membrane 402 to intermediate layer 409. In any of these embodiments, the tri-layered product 400 with slit rigid backing 406 is then wound into roll form as illustrated at 436.

Alternatively, composite floor fastener 400', described above with reference to Fig. 12, is produced by eliminating the intermediate flexible support layer 409 and attaching rigid backing layer 406 directly to non-fastener member bearing surface 430 of membrane 402.

Composite flooring fastener 400 (or 400') can be wound into roll-form for subsequent storage, shipping, and installation. Installation of flooring fastener 400 is achieved by cutting portions of adequate size and shape to fit a particular subfloor to be covered. Each such portion is then attached by, e.g., staples, glue, or other joining means, to the subfloor. In this manner, multiple pieces of flooring fastener 400 can be cut to shape, positioned, and adhered in an adjacent manner to completely cover a subfloor. A temporary cover, e.g., a plastic film or sheet, can be placed over the exposed fastener elements of flooring fastener 400 during installation to avoid unwanted engagement of the fastener elements with, e.g., clothing of an installation worker or other work materials that may come into contact with the fastener elements. When the flooring fastener 400 is adhered in its desired location, the protective cover is removed and a flooring material having an attachment surface with fastener element engageable backing material is removeably attached to the exposed fastener element bearing surface of secured flooring fastener 400.

### Novel Building Wrap Material

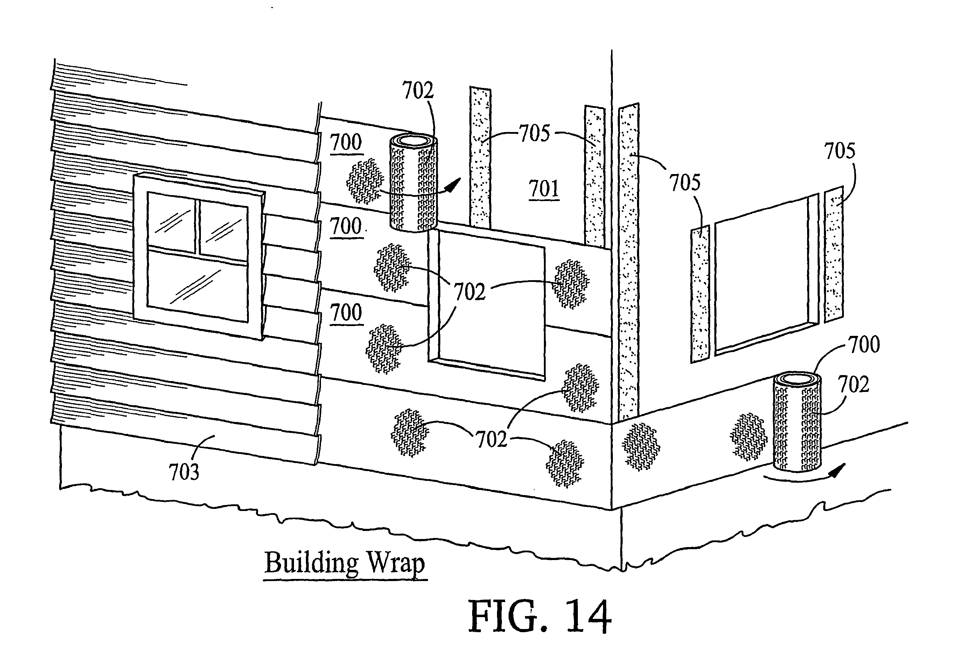

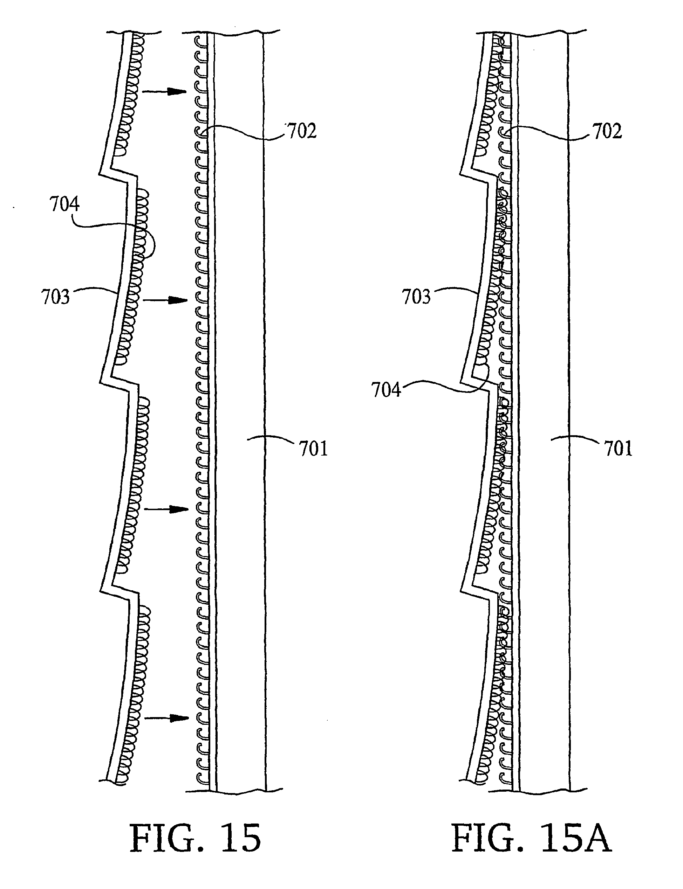

A protective exterior structural wrap is shown in Fig. 14, 15 and 15A Similar to conventional building wrap material, such as DuPont's Tyvek®, the membrane is used to wrap a structure as a vapor-permeable, wind and water-impermeable protective barrier. In this case, the base layer of the membrane, after formation, is subjected e.g., to electrical discharge punching or other pore-forming techniques that render the base layer vapor-permeable, such as laser punching or drilling, pin roll punching, needling or treatment of the sheet with a beam of energetic electrons or ions.

A membrane placed upon a structure may have hooks facing only away from the structure, with the membrane being secured mechanically to the structure, e.g., by stapling, or by a waterproof adhesive. However, in the case shown in Fig. 14, the membrane 700 has loop-engageable hooks 702 formed on both sides of the base layer. For securing the membrane to the building 701, the inwardly facing hooks engage with strategically located loop strips 705 that have previously been secured to the building. Outer (or inner) wall defining members 703, such as clapboard siding, sheathing, or wallboard is attached to the outwardly directed hooks 702 of the membrane by hook-engageable loops 704 disposed on the wall-defining members 703. As with the roofing elements, at overlapping joints of the wall-defining members, a marginal band of hooks may be provided to engage with the layer of loops on the structural member that overlaps it.

In other embodiments, fields of hooks can be disposed on the wall-defining members, and the building wrap membrane may provide a field of loops with which the hooks of the wall-defining members engage.

A further feature of the invention is that the engaged hooks and loops define cells of isolated air space between the base layer of the membrane and the structural or wall members, to provide thermal or sound insulation.

### Further Novel Insulation Applications

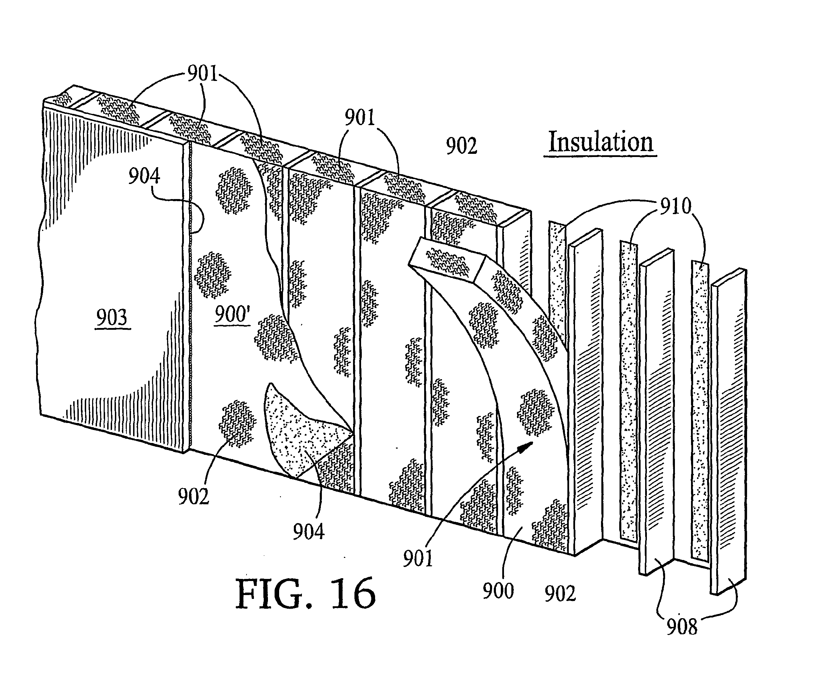

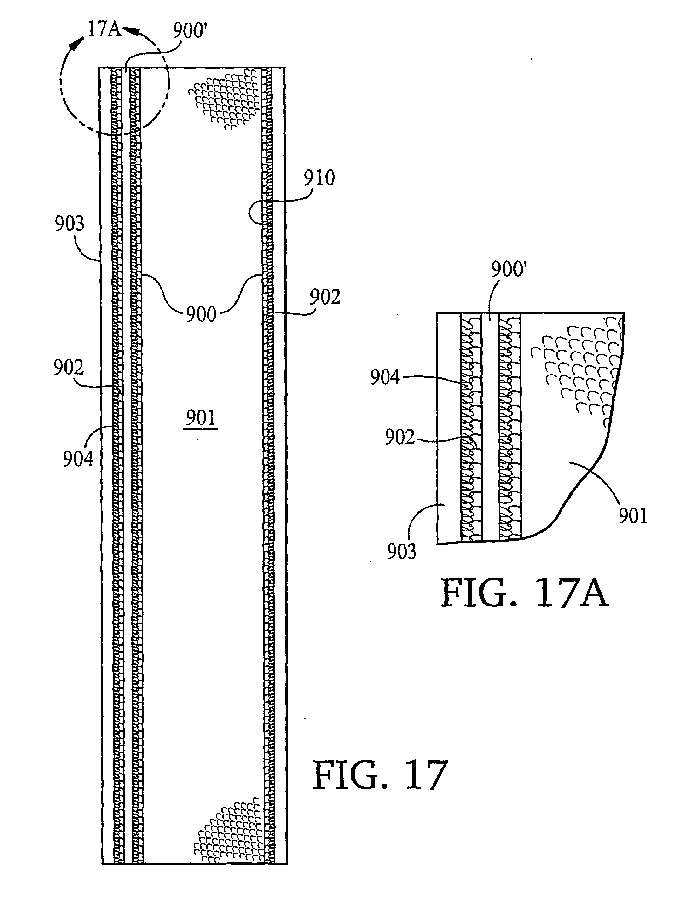

Referring now to Figs. 16, 17 and 17A, a membrane 900 is used to install insulation into a structure while providing an added air or moisture barrier, as previously generally described. In one embodiment, a batt or a portion of insulation 901 is wrapped with a membrane 900 that has hooks facing outwardly from the insulation. The insulation may be a glass fiber batt, cellulose insulation, particulate foam or a foam board. The membrane is secured, e.g., laminated or glued, onto the exterior of the portion of insulation 901 or formed as a sealed envelope containing the insulation. The portion of insulation 901 is positioned into a cavity defined by structural support members 908 such as studs, joists, rafters, etc, that carry loop material 910. The insulation is secured by engaging the hooks 902 of the membrane wrapper with loop material 910 disposed on the support members. Alternatively, a membrane carrying loop material can be provided on the outer wrap of the insulation, and portions of a hook-bearing membrane can be disposed on the support members.

The effect is to removably install the insulation in a tight-fitting manner in a cavity, thus to prevent leaks of cold air at the boundaries, etc.

In the embodiment of Fig. 9 a further membrane 900' has loops 904 on its inner side which engage with hooks carried by the insulation or by structural members. Membrane 900' also has hooks 902 on its outside. A wall board 903 or other wall covering having loop material 904 on its inside surface is placed against the membrane with the matching hooks and loops engaged to hold the wall board or other covering in position.

### Novel Ceiling Installation

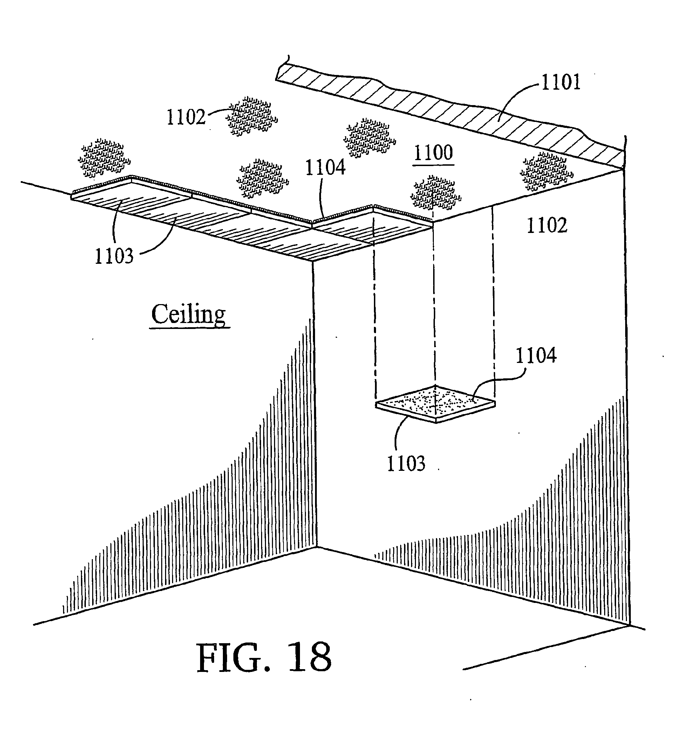

As shown in Fig. 18 a membrane 1100 is fabricated to secure ceiling members 1103 such as tiles, sound-insulating bricks, cellular material, fixtures, or paneling. As shown, the ceiling 1101 is covered with membrane 1100 that has uniform dispersion of loop-engageable hooks .1102 facing downwardly, away from the ceiling. The membrane can be secured to the ceiling, for example, by using staples or adhesives, or by hook and loop engagement between complementary hooks and loops provided on the upper surface of the membrane and ceiling support members, respectively, or vice versa with respect to the location of the hooks and loops.

In Fig. 18, the finished ceiling members 1103, having a layer of loop material 1104 disposed on their upper surfaces, are attached to the membrane 1100 by engaging the hooks 1102 of the membrane with the loops of the finished ceiling members. Since the weight of the ceiling members is entirely borne by the hooks and loops, the hook and loop material preferably has high creep resistance in the tensile direction to secure the ceiling members to the ceiling. In preferred cases the base layer of the membrane is in permanently stretched condition, as has been described.

### Novel Wall Coverings

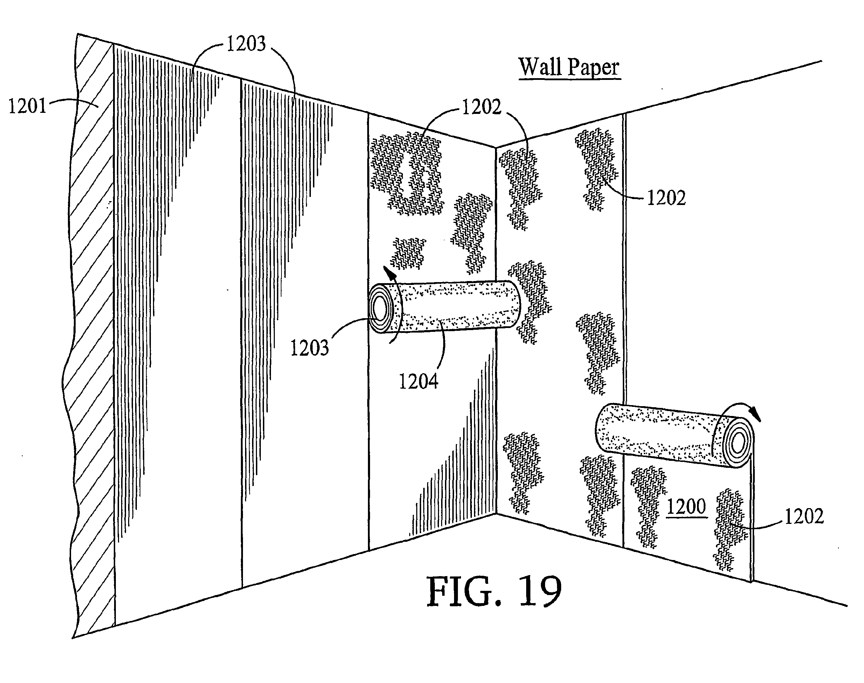

As shown in Fig.19, a stretched and preferably biaxially oriented membrane 1200 is used to secure wall treatments 1203 such as wallpaper (shown in Fig.), fabric or paneling. The wall treatment materials are secured to a wall 1201 carrying membrane 1200 with the hooks 1202 of the membrane facing out from the wall. The plastic membrane offers moisture proofing, an air movement barrier, and added sound and thermal insulation. The wall treatment material shown has a layer of loop material 1204 disposed on its inner surface. The loop material itself can be chosen to provide additional properties such as heat insulation, sound insulation, soft feel, etc, while the dead air cells defined by the engaged hooks and loops add to the insulating as well as a texturizing and softening effect. The membrane may be affixed to the wall with staples or an adhesive, for example. The adhesive can be temporary or permanent, depending upon the application, and the adhesive can be selected to provide additional waterproofing, organic growth control vermin and insect protection, etc. While the wall treatment members are shown secured to the wall by engaging the loops to the hooks, in an alternative embodiment, the loop material can be carried on a stretched membrane disposed on the wall, and a hook-bearing membrane can be provided on the inside surface of the wall covering. In other embodiments a membrane may carry hook or loop fastener elements on both surfaces, one side serving to secure the membrane to the wall and the other side serving to secure the wall covering. The systems described may be used advantageously to mount temporary wall treatments, e.g., for theatrical stages or sales booths and displays, and may be used to mount fabrics carrying advertisements or decoration that can readily be changed. For further features useful for this product see-U.S. Application U.S.S.N. 09/322,663 which is incorporated by reference in its entirety.

### Novel Outdoor Covers

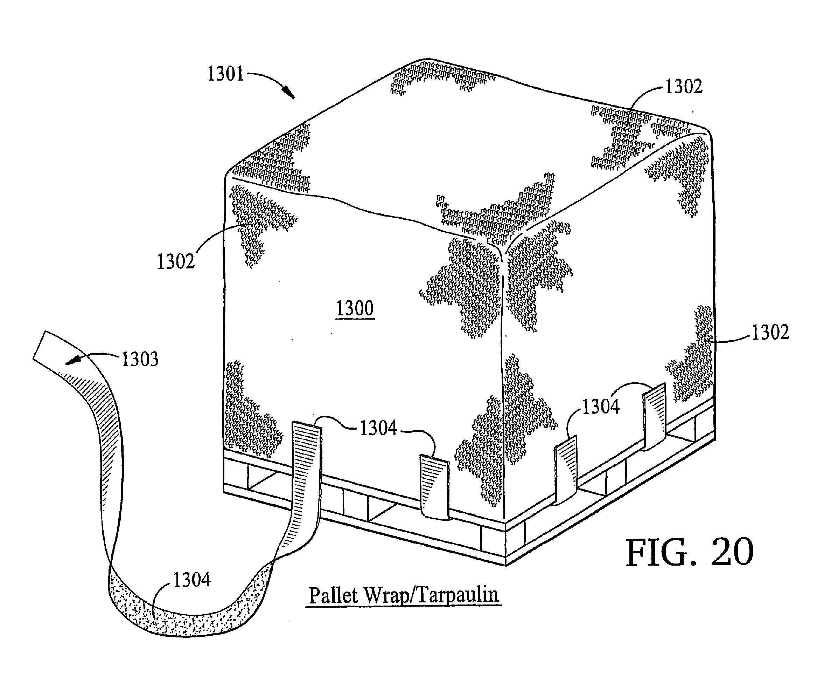

As shown in Fig. 20, a membrane 1300 is constructed for use as a protective tarpaulin, which is air-impermeable and water-impermeable, and which provides the added benefit of easy securement. The membrane can also be treated with or incorporate a biocide or fungicide to resist organic growth. By virtue of the stretching techniques described, the membrane can be manufactured to a size large enough to cover large objects 1301 to be protected. Such objects include, e.g., shrubs, trees, plant materials, boats, vehicles, agricultural objects such as hay bales, straw stacks, ensilage, farm machinery, earth or plants and swimming pools. These objects are typically covered with the membrane 1300 having the hooks 1302 facing toward the exterior, and strips 1303 of loop material 1304 are suitably engaged with the hooks and supporting structure to secure the tarpaulin to itself and/or around a pallet or the protected object, as shown in the figure. In an alternative embodiment the location of the hooks and loops is reversed.

### Novel Shelters Greenhouses and Tents

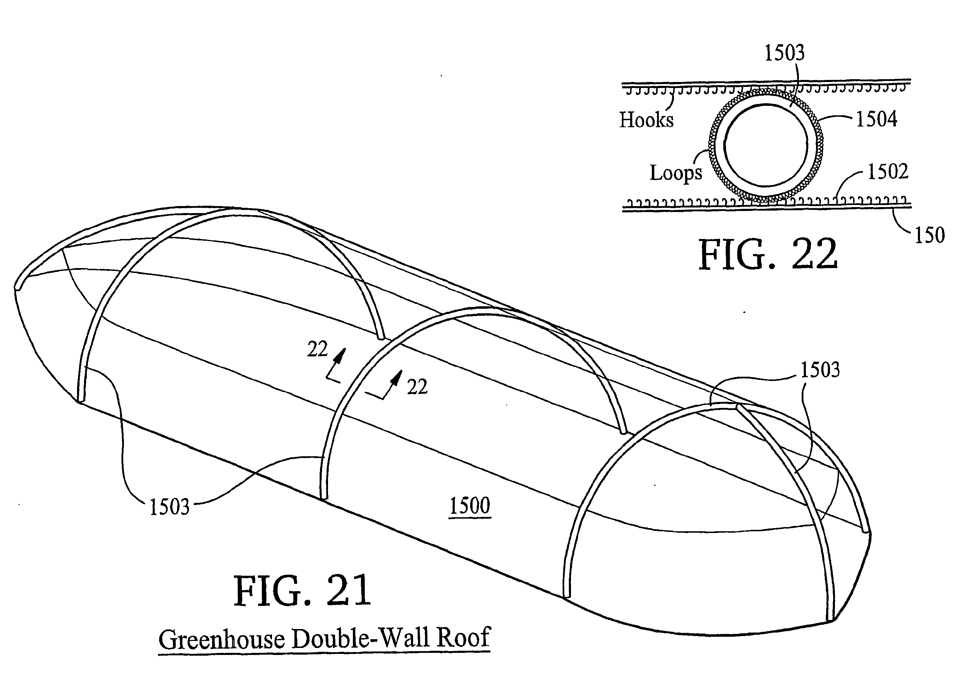

Referring to Figs. 21 and 22, membranes 1500, 1500' are constructed for use as a shelter such as a greenhouse or a tent. The membrane is provided with sufficient thickness and strength to span substantial distances between supports and to resist the forces of storm-force winds and rains. It is constructed as a protective barrier that is air-impermeable and water-impermeable, though it may be provided with pores, as described above, to enable transmission of water vapor. As shown in Fig. 22, in one embodiment, the shelter is formed of a frame 1503 made of a rigid material such as metal piping, PVC piping, etc. Disposed on the exterior of the frame elements is loop material 1504. For example, the loop material is wrapped around rigid pipes. Inner and outer layers of membrane 1500 and 1500' are provided, typically of transparent membrane, which are supported by the frame. The outer membrane 1500 has its hooks facing toward the interior, to engage with the loop material of the pipe supports to define the shelter, e.g., a greenhouse. Additionally, the shelter can include the additional layer 1500' of membrane to provide better thermal insulation. In this case the hooks of the membrane 1500' directed upwardly engage loops on the supporting pipes.

### Novel Geotextiles

In another embodiment, a membrane is constructed as a geotextile or geomembrane. Typically, these are large sheets that are used to retain soil against erosion, to confine water flows, etc. In the prior art, typically adjacent sheets are joined together by gluing, welding or stitching. By constructing a geotextile or geomembrane according to the invention, strips of loop material engage areas of hooks of adjacent membrane sheets to hold them in place, or overlapping margins of adjacent membrane sheets are provided with appropriately placed sections or bands of hook and loop that are mated to join overlapping sheets together. Additionally, adhesive strips covering the joints may be used to keep the joints water-impermeable, or hook and loop strips 507 including sealant, such as disclosed in Figs. 4A and 4B may be used to seal the joints.

Other preferred features and configurations of fastener material disclosed in our earlier U.S. patent applications, incorporated by reference above, are useful in the construction of the various products that have been described, and provide further novel features.

## Claims

1. A method of retaining soil or confining water flows, the method comprising:
providing an environmental membrane comprised of a base layer of thermoplastic resin and, over at least one broad surface of the membrane, a dispersion of fastener elements, such as hook and loop fastener elements, that are available for engagement with complementary material for securing to the membrane; and
covering soil with the provided membrane to retain soil against erosion or to confine water flows.

2. The method of claim 1, wherein the base layer of thermoplastic resin is in a permanently width-wise stretched condition relative to its machine direction.

3. The method of claim 1, wherein the base layer of thermoplastic resin is in a stretched condition in both width-wise and lengthwise directions.

4. The method of claim 1, wherein the base layer of thermoplastic resin is biaxially oriented.

5. The method of claim 1, wherein the base layer of thermoplastic resin has a thickness of between about 0.001 inch (0.0254 mm) and about 0.015 inch (0.381 mm).

6. The method of claim 1, wherein the base layer of thermoplastic resin has a thickness of less than about 0.008 inch (0.2032 mm).

7. The method of claim 1, wherein the fastener elements are in the form of hooks.

8. The method of claim 7, wherein the hooks are in the form of mushroom, palm tree, single-directioned or multi-directioned hooks.

9. The method of claim 7, wherein the hooks are formed integrally with the base layer of thermoplastic resin.

10. The method of claim 7, wherein the hooks are discretely molded elements that are formed simultaneously with the base layer of thermoplastic resin.

11. The method of claim 1, wherein the membrane has dimensions of at least two feet (0.6096 m) in both length and width, such as at least three (0.9144 m) or five feet (1.524 m) or more in length and/or width.

12. The method of claim 1, wherein the thermoplastic resin is selected from the group consisting of polypropylene, polyethylene terephthalate, polyethylene and nylon, copolymers thereof, and compatible mixtures thereof.

13. The method of claim 1, wherein the thermoplastic resin includes a biocide or fungicide capable of preventing growth of biological material, such as mold or fungus.

14. The method of claim 1, wherein the thermoplastic resin includes a U.V. absorber or other additive to protect the membrane from deterioration.

15. The method of claim 1, further comprising post-treating the membrane to render the membrane capable of passing water.

16. The method of claim 1, further comprising providing another membrane having complementary fastener elements to the membrane; placing the other membrane adjacent the membrane; and engaging the fastener elements of the membrane with the complementary fastener elements of the other membrane.
